# FASCICULE DE BREVET EUROPEEN

(11) **EP 1 669 221 B1**
(45) Date de publication et mention de la délivrance du brevet: **12.03.2008**
(21) Numéro de dépôt: 05026450.6
(22) Date de dépôt: 05.12.2005
(51) Int. Cl.: B60C 23/04

(54) **Procédé et dispositif de localisation de la position droite ou gauche d'une roue de véhicule**
Verfahren und Vorrichtung zur Lokalisierung der rechten oder linken Position eines Fahrzeugrades
Method and device for locating the left or right position of a vehicle wheel

(30) Priorité: 10.12.2004 FR 0413175
(43) Date de publication de la demande: 14.06.2006
(73) Titulaire: Siemens VDO Automotive, 31036 Toulouse Cedex 1 (FR)
(72) Inventeur: Allard, Pierre-Yves, 31470 Fontsorbes (FR); Dulac, Gilles, 31270 Villeneuve Tolosane (FR)

(56) Documents cités:
- EP-A- 1 481 823
- WO-A-20/04048131
- GB-A- 2 344 232

## Description

L'invention concerne un procédé et un dispositif de localisation de la position droite ou gauche d'une roue de véhicule.

De plus en plus de véhicules automobiles possèdent, à des fins de sécurité, des systèmes de surveillance comportant des capteurs montés sur chacune des roues du véhicule, dédiés à la mesure de paramètres, tels que pression ou température des pneumatiques équipant ces roues, et destinés à informer le conducteur de toute variation anormale du paramètre mesuré.

Ces systèmes de surveillance sont classiquement dotés d'un capteur monté sur chacune des roues du véhicule et comportant un microprocesseur et un émetteur radiofréquence (ou émetteur RF), et d'une unité centrale de réception des signaux émis par les émetteurs, comportant un calculateur intégrant un récepteur radiofréquence (ou récepteur RF) connecté à une antenne.

Un des problèmes que nécessitent de résoudre de tels systèmes de surveillance réside dans l'obligation de devoir associer à chaque signal reçu par le récepteur de l'unité centrale, une information concernant la localisation du capteur et donc de la roue à l'origine de ce signal, cette obligation perdurant pendant la durée de vie du véhicule, c'est à dire devant être respectée même après des changements de roues ou plus simplement des inversions de la position de ces roues.

A l'heure actuelle, une première méthode de localisation consiste à utiliser trois antennes basse fréquence positionnées chacune à proximité d'une des roues du véhicule, et à effectuer une procédure de localisation consistant à exciter successivement chacune de ces trois antennes par l'émission d'un champ magnétique basse fréquence. Chacun de ces capteurs fait alors connaître (tour à tour) son numéro d'identification à l'unité centrale. Celle-ci associe ce numéro d'identification à une position sur le véhicule (avant droit, avant gauche, arrière droit, arrière gauche).

Selon cette procédure, le capteur monté sur la roue située à proximité de l'antenne excitée commande, en réponse et à destination de l'unité centrale, l'émission d'un signal basse fréquence comportant un code d'identification du dit capteur, de sorte que l'excitation successive des trois antennes conduit à la localisation des trois capteurs montés sur les roues jouxtant ces antennes, et par déduction, à la localisation du quatrième capteur.

Le principal avantage d'un tel procédé réside dans le fait que la procédure de localisation est très rapide et conduit à une localisation quasi-instantanée après le démarrage du véhicule.

Par contre, cette solution impose d'équiper le véhicule de trois antennes avec toutes les sujétions afférentes : câbles de connexion, amplificateurs de commande..., de sorte qu'elle s'avère coûteuse.

Afin de limiter le coût requis par la procédure de localisation, une seconde solution mise en oeuvre actuellement consiste, en premier lieu, à réduire à deux le nombre d'antennes, et à positionner ces deux antennes à proximité des deux roues avant, de façon à permettre de localiser les dites deux roues avant, et de différencier ces dernières des deux roues arrière.

Cette seconde solution combine, en outre, à l'utilisation des deux antennes, une technique basée sur une méthode statistique consistant à comparer les accélérations des roues en virage, pour opérer une discrimination entre les roues gauches et les roues droites.

Du fait de la suppression d'une antenne, cette seconde solution s'avère, tel que précité, moins onéreuse que celle précédemment décrite. Toutefois, cette économie est réalisée au détriment de la rapidité de la procédure de localisation qui s'avère, selon cette seconde solution, relativement longue du fait qu'un temps de roulage conséquent est requis pour réaliser la discrimination gauche/droite.

La présente invention vise à pallier l'inconvénient lié à la longueur de la procédure de localisation droite/gauche de la seconde technique ci-dessus décrite, et a pour principal objectif de fournir un procédé de localisation droite/gauche très performant en terme de réactivité, nécessitant en outre, en vue de sa mise en oeuvre, un matériel d'un prix global de revient et d'installation inférieur au prix global d'une antenne.

A cet effet, l'invention vise, en premier lieu, un procédé de localisation de la position droite ou gauche d'une roue de véhicule, selon lequel :
- on équipe la dite roue de deux capteurs magnétiques présentant des axes de sensibilité maximale s'étendant dans un plan sécant par rapport à l'axe de rotation de la roue, et décalés l'un par rapport à l'autre, dans ce plan sécant, d'un angle prédéterminé θ,
- et, lors des déplacements du véhicule selon un sens de déplacement donné :
   ■ on mesure un signal généré par la variation d'un champ magnétique aux bornes de chacun des capteurs magnétiques, de façon à délivrer deux signaux périodiques déphasés l'un par rapport à l'autre d'une valeur angulaire égale à (+ ou -) θ, représentatifs chacun des variations des valeurs du champ magnétique détectées par les dits capteurs magnétiques pendant un tour de roue,
   ■ on détermine à partir de ce déphasage le sens de rotation de la roue,
   ■ et on déduit de ce sens de rotation et du sens de déplacement du véhicule, la localisation de la position droite ou gauche de la roue.

Le principe à la base de l'invention a donc été d'équiper chaque roue à localiser d'un véhicule de deux capteurs magnétiques disposés de façon que les signaux aux bornes des dits capteurs soient déphasés l'un par rapport à l'autre, et de déduire de ce déphasage le sens de rotation et la localisation droite/gauche de la roue.

Selon ce principe, l'invention conduit à une localisation très rapide de la position droite/gauche d'une roue, obtenue, en effet, après quelques tours de roue. De plus, le prix de revient global (coût et installation) de deux capteurs magnétiques est inférieur à celui d'une antenne.

Il est à noter qu'il est connu, notamment de la demande de brevet internationale WO2004/048131 de procéder à la localisation droite/gauche d'une roue en équipant cette dernière de deux accéléromètres disposés de façon que les composantes verticales des directions de mesure des dits accéléromètres soient décalées d'une valeur angulaire Δ, et que les signaux délivrés par ces accéléromètres soient déphasés de cette même valeur Δ.

Un tel procédé présente donc certaines analogies avec celui de l'invention du fait qu'il consiste à déterminer le sens de rotation de la roue à partir de l'analyse du déphasage entre les signaux délivrés par deux capteurs montés sur la roue.

Toutefois, selon ce document antérieur, les capteurs utilisés consistent en des accéléromètres, c'est-à-dire, d'une part en des capteurs d'un coût de revient élevé, et d'autre part en des moyens de mesure dont les résultats des mesures ne sont exploitables que lorsque le véhicule se déplace avec une vitesse supérieure à un seuil donné de l'ordre de 40 Km/h.

L'invention consiste, quant à elle, à utiliser deux capteurs de très faible prix de revient dont les résultats des mesures sont exploitables très rapidement dès les premiers tours de roue du véhicule.

En vue d'obtenir deux signaux facilement discriminables, et selon un mode de mise en oeuvre avantageux de l'invention, on positionne les deux capteurs magnétiques de façon que leurs axes de sensibilité maximale s'étendent orthogonalement l'un par rapport à l'autre.

Dans le même but, et de façon avantageuse selon l'invention, on positionne les deux capteurs magnétiques de façon que leurs axes de sensibilité maximale s'étendent dans un plan orthogonal par rapport à l'axe de rotation de la roue.

En outre, en vue d'augmenter la sensibilité du procédé selon l'invention, et de façon avantageuse, on amplifie et on met en forme le signal cyclique représentatif des variations des valeurs du champ magnétique détectées par chaque capteur magnétique, de façon à obtenir un signal périodique de forme carrée lors des déplacements du véhicule.

Dans la même optique d'augmenter la sensibilité et donc la fiabilité du procédé selon l'invention, on équipe avantageusement le véhicule d'un aimant fixe par rapport à chaque roue équipée de deux capteurs magnétiques, le dit aimant étant positionné et présentant une puissance adaptée pour générer un champ magnétique couvrant une zone traversée par le dit capteur magnétique lors de la rotation de la dite roue.

L'invention s'étend à un dispositif de localisation de la position droite ou gauche d'une roue de véhicule, comprenant, montés sur la dite roue :
■ deux capteurs magnétiques présentant des axes de sensibilité maximale s'étendant dans un plan sécant par rapport à l'axe de rotation de la roue, et décalés l'un par rapport à l'autre, dans ce plan sécant, d'un angle prédéterminé θ,
■ des moyens de mesure d'un signal aux bornes de chacun des capteurs magnétiques, aptes à délivrer deux signaux périodiques déphasés l'un par rapport à l'autre d'une valeur angulaire égale à (+ ou -) θ, représentatifs chacun des variations des valeurs du champ magnétique détectées par les dits capteurs magnétiques pendant un tour de roue,
■ et une unité de calcul programmée pour déterminer, à partir du déphasage entre les deux signaux périodiques, le sens de rotation de la roue, et pour déduire de ce sens de rotation et du sens de déplacement du véhicule, la localisation droite ou gauche de la roue.

De façon avantageuse selon l'invention, les deux capteurs magnétiques sont positionnés de façon que leurs axes de sensibilité maximale s'étendent dans un plan orthogonal par rapport à l'axe de rotation de la roue.

De plus, ces deux capteurs magnétiques sont avantageusement positionnés de façon que leurs axes de sensibilité maximale s'étendent orthogonalement l'un par rapport à l'autre.

Par ailleurs, de façon avantageuse selon l'invention, les moyens de mesure comprennent des moyens d'amplification, et des moyens de mise en forme du signal amplifié aptes à le transformer en un signal périodique de forme carrée.

Le dispositif de localisation selon l'invention comprend, également, avantageusement un aimant monté fixe sur le véhicule par rapport à chaque roue équipée de deux capteurs magnétiques, le dit aimant étant positionné et présentant une puissance adaptée pour générer un champ magnétique couvrant une zone traversée par les dits capteurs magnétiques lors de la rotation de la dite roue.

D'autres caractéristiques buts et avantages de l'invention ressortiront de la description détaillée qui suit en référence aux dessins annexés qui en représentent à titre d'exemple non limitatif un mode de réalisation préférentiel. Sur ces dessins :

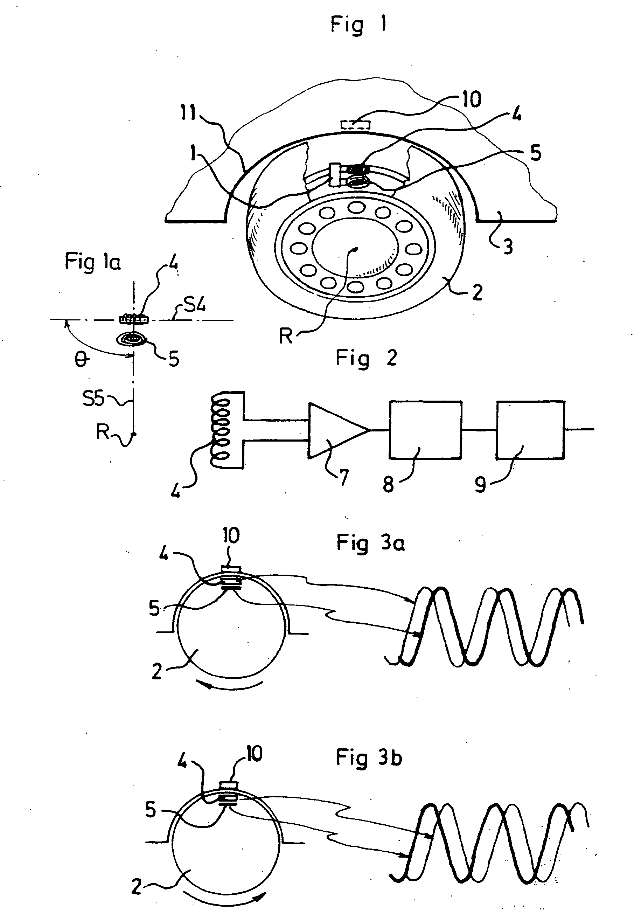

- la figure 1 est une vue en perspective partielle et schématique d'un véhicule équipé d'un dispositif de localisation selon l'invention,
- la figure 1 a est un schéma de détail représentant la disposition relative des deux capteurs magnétiques du dispositif de localisation selon l'invention,
- la figure 2 est un schéma synoptique fonctionnel de l'électronique de traitement de ce dispositif de localisation,
- et les figures 3a et 3b sont deux schémas illustratifs du principe du procédé de localisation mis en oeuvre conformément à l'invention.

Le dispositif de localisation selon l'invention représenté à titre d'exemple à la figure 1 est destiné à la localisation de la position droite ou gauche d'une roue d'un véhicule.

Ce dispositif de localisation est plus spécifiquement destiné à être installé sur des véhicules dotés d'un système de surveillance comportant des boîtiers électroniques 1 montés sur chacune des roues 2 de véhicules 3, intégrant des capteurs dédiés à la mesure de paramètres, tels que pression et/ou température des pneumatiques équipant ces roues 2, et destinés à informer le conducteur de toute variation anormale du paramètre mesuré.

Ce dispositif de localisation comprend, en premier lieu, deux capteurs magnétiques 4, 5 adaptés pour pouvoir être intégrés dans un même boîtier électronique 1, et disposés de façon que leurs axes de sensibilité maximale respectifs S4, S5 s'étendent dans un même plan perpendiculaire à l'axe de rotation de la roue 2, et soient décalés l'un par rapport à l'autre d'un angle prédéterminé θ = 90°.

A cet effet, et selon l'exemple de réalisation représenté aux figures, ces deux capteurs magnétiques 4, 5, d'une part, sont axés sur un même axe radial par rapport par rapport à l'axe de rotation R de la roue 2, et d'autre part, consistent en :
- une bobine 4 comportant un noyau en fer doux, positionnée de façon que l'axe longitudinal du dit noyau, formant l'axe de sensibilité maximale S4 de la dite bobine, coïncide avec un axe tangent par rapport à un cercle axé sur l'axe de rotation R de la roue 2,
- et une bobine plate 5 formée d'un enroulement plan positionné de façon que l'axe longitudinal du dit enroulement formant l'axe de sensibilité maximale S5 de la dite bobine, coïncide avec l'axe radial précité.

Ainsi disposée, lors de la rotation de la roue 2, chacune de ces bobines 4, 5 présente, entre ses deux bornes, une différence de potentiel variable selon une fonction sinusoïdale de période égale à la période de rotation de la dite roue.

Un capteur magnétique 4, 5 monté sur une roue 2 de véhicule 3 détecte, en effet, le champ magnétique global régnant autour de ce capteur, composé du champ magnétique terrestre additionné du champ magnétique environnemental pouvant notamment résulter de la présence d'équipements électriques ou magnétiques embarqués dans le véhicule.

Or, lors de la rotation de la roue 2, ce capteur magnétique 4, 5 se déplace selon une trajectoire circulaire, de sorte que ce capteur 4, 5 détecte un champ magnétique variable et que la différence de potentiel mesurée aux bornes du dit capteur présente des variations cycliques correspondantes.

En outre, les deux bobines 4, 5 étant positionnées, selon l'invention, de façon que leurs axes de sensibilité maximale S4, S5 soient orthogonaux, les signaux représentatifs de la différence de potentiel aux bornes des dites bobines sont déphasés l'un par rapport à l'autre d'un angle égal à (+ ou -) 90°, de sorte que, tel que représenté aux figures 3a et 3b, l'analyse de ce déphasage permet de déterminer le sens de rotation de la roue 2.

En vue de la mesure et du traitement de la différence de potentiel aux bornes de chaque bobine 4, 5 le dispositif selon l'invention comporte, en premier lieu, un module d'amplification 7 et un module de mise en forme 8 incorporant un comparateur, de sorte que, lors de la rotation de la roue 2 :
- le signal aux bornes de chaque bobine 4, 5 est un signal sinusoïdal de très faible amplitude,
- le signal en sortie du module d'amplification 7 est un signal sinusoïdal de même période que le signal précédent mais d'amplitude supérieure à celle du dit signal,
- et le signal en sortie du module de mise en forme 8 est un signal carré de même période que les signaux sinusoïdaux.

Le dispositif selon l'invention comporte, en outre, une unité de calcul 9 vers laquelle est délivré le signal mis en forme, programmée pour :
- déterminer, tel que précité, à partir de l'analyse du déphasage entre les deux signaux sinusoïdaux, le sens de rotation de la roue 2,
- et déduire de ce sens de rotation et du sens de déplacement du véhicule 3, déterminé par ailleurs par tout procédé connu en soi, la position droite ou gauche de la roue 2.

En dernier lieu, et selon l'invention, le véhicule 3 peut également comporter, tel que représenté à la figure 1, des aimants permanents ou électromagnétiques 10 fixés sur la carrosserie au niveau des passages de roues 11, de sorte que le champ magnétique créé par chacun de ces aimants 10 est détecté par les capteurs magnétiques 4, 5 montés sur la roue 2 correspondante, augmentant le champ magnétique global détecté par les dits capteurs, et par conséquent l'amplitude des signaux sinusoïdaux en sortie du module d'amplification 7.

Le dispositif selon l'invention décrit ci-dessus permet donc, moyennant d'intégrer deux simples capteurs magnétiques 4, 5 de faible coût dans chaque boîtier électronique 1 embarqué sur une roue 2 de véhicule 3, de localiser très rapidement, après quelques tours de roue 2, la position droite ou gauche de la dite roue.

## Revendications

1. Procédé de localisation de la position droite ou gauche d'une roue (2) de véhicule (3), **caractérisé en ce qu**'il consiste :
- à équiper la dite roue de deux capteurs magnétiques (4, 5) présentant des axes de sensibilité maximale (S4, S5) s'étendant dans un plan sécant par rapport à l'axe de rotation (R) de la roue (2), et décalés l'un par rapport à l'autre, dans ce plan sécant, d'un angle prédéterminé θ,
- et, lors des déplacements du véhicule selon un sens de déplacement donné :
■ à mesurer un signal généré par la variation d'un champ magnétique aux bornes de chacun des capteurs magnétiques (4, 5), de façon à délivrer deux signaux périodiques déphasés l'un par rapport à l'autre d'une valeur angulaire égale à (+ ou -) θ, représentatifs chacun des variations des valeurs du champ magnétique détectées par les dits capteurs magnétiques pendant un tour de roue (2),
■ à déterminer à partir de ce déphasage le sens de rotation de la roue (2),
■ et à déduire de ce sens de rotation et du sens de déplacement du véhicule (3), la localisation de la position droite ou gauche de la roue (2).

2. Procédé de localisation selon la revendication 1 **caractérisé en ce que** l'on positionne les deux capteurs magnétiques (4, 5) de façon que leurs axes de sensibilité maximale (S4, S5) s'étendent dans un plan orthogonal par rapport à l'axe de rotation (R) de la roue (2).

3. Procédé de localisation selon la revendication 2 **caractérisé en ce que** l'on positionne les deux capteurs magnétiques (4, 5) de façon que leurs axes de sensibilité maximale (S4, S5) s'étendent orthogonalement l'un par rapport à l'autre.

4. Procédé de localisation selon l'une des revendications 1 à 3 **caractérisé en ce que** l'on équipe le véhicule (3) d'un aimant (10) fixe par rapport à chaque roue (2) équipée de deux capteurs magnétiques (4, 5), le dit aimant étant positionné et présentant une puissance adaptée pour générer un champ magnétique couvrant une zone traversée par les dits capteurs magnétiques lors de la rotation de la dite roue.

5. Dispositif de localisation de la position droite ou gauche d'une roue (2) de véhicule (3), **caractérisé en ce qu**'il comprend, montés sur la dite roue :
• deux capteurs magnétiques (4, 5) présentant des axes de sensibilité maximale (S4, S5) s'étendant dans un plan sécant par rapport à l'axe de rotation (R) de la roue (2), et décalés l'un par rapport à l'autre, dans ce plan sécant, d'un angle prédéterminé θ,
■ des moyens (7, 8) de mesure d'un signal aux bornes de chacun des capteurs magnétiques (4, 5), aptes à délivrer deux signaux périodiques déphasés l'un par rapport à l'autre d'une valeur angulaire égale à (+ ou -) θ, représentatifs chacun des variations des valeurs du champ magnétique détectées par les dits capteurs magnétiques pendant un tour de roue (2),
■ et une unité de calcul (9) programmée pour déterminer, à partir du déphasage entre les deux signaux périodiques, le sens de rotation de la roue (2), et pour déduire de ce sens de rotation et du sens de déplacement du véhicule (3), la localisation droite ou gauche de la roue (2).

6. Dispositif de localisation selon la revendication 5 **caractérisé en ce que** les deux capteurs magnétiques (4, 5) sont positionnés de façon que leurs axes de sensibilité maximale (S4, S5) s'étendent dans un plan orthogonal par rapport à l'axe de rotation (R) de la roue (2).

7. Dispositif de localisation selon la revendication 6 **caractérisé en ce que** les deux capteurs magnétiques (4, 5) sont positionnés de façon que leurs axes de sensibilité maximale (S4, S5) s'étendent orthogonalement l'un par rapport à l'autre.

8. Dispositif de localisation selon l'une des revendications 6 à 7 **caractérisé en ce qu**'il comprend un aimant (10) monté fixe sur le véhicule (3) par rapport à chaque roue (2) équipée de deux capteurs magnétiques (4, 5), le dit aimant étant positionné et présentant une puissance adaptée pour générer un champ magnétique couvrant une zone traversée par les dits capteurs magnétiques lors de la rotation de la dite roue.

## Claims

1. Method for locating the position, on the right or on the left, of a wheel (2) of a vehicle (3), **characterised in that** it consists:
- in equipping said wheel with two magnetic sensors (4, 5) having axes of maximum sensitivity (S4, S5) lying in a plane that is secant to the axis of rotation (R) of the wheel (2) and which are offset from one another in this secant plane by a predetermined angle θ,
- and, as the vehicle moves in a given direction of travel:
• in measuring a signal generated by the variation in a magnetic field at the terminals of each of the magnetic sensors (4, 5) so as to deliver two periodic signals phase-shifted with respect to one another by an angular value equal to (+ or -) θ, each one representative of the variations in the values of the magnetic field as detected by said magnetic sensors during one revolution of the wheel (2),
• in determining from this phase shift the direction of rotation of the wheel (2),
• and in deducing from this direction of rotation and from the direction of travel of the vehicle (3), the location of the wheel (2), whether positioned on the right or on the left.

2. Location method according to claim 1, **characterised in that** the two magnetic sensors (4, 5) are positioned in such a way that their axes of maximum sensitivity (S4, S5) lie in a plane orthogonal to the axis of rotation (R) of the wheel (2).

3. Location method according to claim 2, **characterised in that** the two magnetic sensors (4, 5) are positioned in such a way that their axes of maximum sensitivity (S4, S5) lie orthogonal to one another.

4. Location method according to one of claims 1 to 3, **characterised in that** the vehicle (3) is equipped with a magnet (10) that is fixed with respect to each wheel (2) equipped with two magnetic sensors (4, 5), said magnet being positioned and having a power suitable for generating a magnetic field covering a zone through which said magnetic sensors pass as said wheel rotates.

5. Device for locating the position, on the right or on the left, of a wheel (2) of a vehicle (3), **characterised in that** it comprises, mounted on said wheel:
• two magnetic sensors (4, 5) having axes of maximum sensitivity (S4, S5) lying in a plane that is secant to the axis of rotation (R) of the wheel (2) and which are offset from one another in this secant plane by a predetermined angle θ,
• means (7, 8) for measuring a signal at the terminals of each of the magnetic sensors (4, 5), these means being able to deliver two periodic signals phase-shifted from one another by an angular value equal to (+or -) θ, each representative of the variations in the values of the magnetic field as detected by said magnetic sensors during a revolution of the wheel (2),
• and a calculation unit (9) programmed to determine, from the phase shift between the two periodic signals, the direction of rotation of the wheel (2) and, from this direction of rotation and from the direction of travel of the vehicle (3), to deduce the location, on the right or on the left, of the wheel (2).

6. Location device according to claim 5, **characterised in that** the two magnetic sensors (4, 5) are positioned in such a way that their axes of maximum sensitivity (S4, S5) lie in a plane orthogonal to the axis of rotation (R) of the wheel (2).

7. Location device according to claim 6, **characterised in that** the two magnetic sensors (4, 5) are positioned in such a way that their axes of maximum sensitivity (S4, S5) lie orthogonal to one another.

8. Location device according to claim 6 or claim 7, **characterised in that** it comprises a magnet (10) mounted fixedly on the vehicle (3) with respect to each wheel (2) equipped with two magnetic sensors (4, 5), said magnet being positioned and having a power suitable for generating a magnetic field covering a zone through which said magnetic sensors pass as said wheel rotates.

## Patentansprüche

1. Verfahren zur Lokalisierung der rechten oder linken Position eines Rades (2) eines Fahrzeugs (3), **dadurch gekennzeichnet, dass** es darin besteht:
- das Rad mit zwei Magnetsensoren (4, 5) auszurüsten, die Achsen maximaler Empfindlichkeit (S4, S5) aufweisen, die sich in einer Schnittebene in Bezug auf die Drehachse (R) des Rades (2) erstrecken, und die zueinander in dieser Schnittebene um einen vorbestimmten Winkel θ versetzt sind,
- und bei den Fahrten des Fahrzeugs gemäß einer gegebenen Fahrtrichtung:
■ ein Signal, das durch die Änderung eines Magnetfelds erzeugt wird, an den Klemmen jedes der Magnetsensoren (4, 5) zu messen, um zwei periodisch zueinander phasenverschobene Signale mit einem Winkelwert gleich (+ oder -) θ auszugeben, die jeweils für die Änderungen der Magnetfeldwerte charakteristisch sind, die von den Magnetsensoren während einer Umdrehung des Rades (2) erkannt werden,
■ aus dieser Phasenverschiebung die Drehrichtung des Rades (2) zu bestimmen,
■ und aus dieser Drehrichtung und der Fahrtrichtung des Fahrzeugs (3) die Lokalisierung der rechten oder linken Position des Rades (2) herzuleiten.

2. Verfahren zur Lokalisierung nach Anspruch 1, **dadurch gekennzeichnet, dass** die beiden Magnetsensoren (4, 5) derart positioniert sind, dass ihre Achsen maximaler Empfindlichkeit (S4, S5) sich in einer Ebene erstrecken, die rechtwinklig in Bezug auf die Drehachse (R) des Rades (2) ist.

3. Verfahren zur Lokalisierung nach Anspruch 2, **dadurch gekennzeichnet, dass** beide Magnetsensoren (4, 5) derart positioniert sind, dass ihre Achsen maximaler Empfindlichkeit (S4, S5) sich in Bezug auf einander rechtwinklig erstrecken.

4. Verfahren zur Lokalisierung nach einem der Ansprüche 1 bis 3, **dadurch gekennzeichnet, dass** das Fahrzeug (3) mit einem Magnet (10) ausgerüstet ist, der in Bezug auf jedes mit zwei Magnetsensoren (4, 5) ausgerüstete Rad (2) feststehend ist, wobei der Magnet positioniert ist und eine angepasste Stärke aufweist, um ein Magnetfeld zu erzeugen, das einen Bereich bedeckt, der von den Magnetsensoren bei der Umdrehung des Rades durchquert wird.

5. Vorrichtung zur Lokalisierung der rechten oder linken Position eines Rades (2) eines Fahrzeugs (3), **dadurch gekennzeichnet, dass** sie, auf dem Rad montiert umfasst:
■ zwei Magnetsensoren (4, 5), die Achsen maximaler Empfindlichkeit (S4, S5) aufweisen, die sich in einer Schnittebene in Bezug auf die Drehachse (R) des Rades (2) erstrecken, und zueinander in dieser Schnittebene um einen vorbestimmten Winkel θ versetzt sind,
■ Mittel (7, 8) zum Messen eines Signals an den Klemmen jedes der Magnetsensoren (4, 5), die dazu geeignet sind, zwei periodisch zueinander um einem Winkelwert gleich (+ oder -) θ phasenverschobene Signale auszugeben, jeweils für die Änderungen der Magnetfeldwerte charakteristisch, die von den Magnetsensoren während einer Umdrehung des Rades (2) erkannt werden,
■ und eine Recheneinheit (9), die programmiert ist, aus der Phasenverschiebung zwischen beiden periodischen Signalen die Drehrichtung des Rades (2) zu bestimmen, und aus dieser Drehrichtung und der Fahrtrichtung des Fahrzeugs (3) die rechte oder linke Lokalisierung des Rades (2) herzuleiten.

6. Vorrichtung zur Lokalisierung nach Anspruch 5, **dadurch gekennzeichnet, dass** beide Magnetsensoren (4, 5) derart positioniert sind, dass ihre Achsen maximaler Empfindlichkeit (S4, S5) sich in einer Orthogonalebene in Bezug auf die Drehachse (R) des Rades (2) erstrecken.

7. Vorrichtung zur Lokalisierung nach Anspruch 6, **dadurch gekennzeichnet, dass** beide Magnetsensoren (4, 5) derart positioniert sind, dass ihre Achsen maximaler Empfindlichkeit (S4, S5) sich rechtwinklig in Bezug auf einander erstrecken.

8. Vorrichtung zur Lokalisierung nach einem der Ansprüche 6 bis 7, **dadurch gekennzeichnet, dass** sie einen Magnet (10) umfasst, der in Bezug auf jedes mit zwei Magnetsensoren (4, 5) ausgerüstete Rad (2) fest auf das Fahrzeug (3) montiert wird, wobei der Magnet positioniert ist und eine angepasste Stärke aufweist, um ein Magnetfeld zu erzeugen, das einen Bereich bedeckt, der von den Magnetsensoren bei der Umdrehung des Rades durchquert wird.
